# EUROPEAN PATENT APPLICATION

(11) **EP 2 081 372 A1**
(43) Date of publication of application: **22.07.2009**
(21) Application number: 08250196.6
(22) Date of filing: 16.01.2008
(51) Int. Cl.: H04M 3/56

(54) **Audio conferencing**

(71) Applicant: British Telecommunications public limited company, 81 Newgate Street London EC1A 7AJ (GB)
(72) Inventor: The designation of the inventor has not yet been filed
(74) Representative: Lidbetter, Timothy Guy Edwin

(57) **Abstract**

A communications conference management system is prepared for the establishment of conference calls, by pre-programming the management system with identification data for participants authorised to be connected to a specific conference residing on a conference bridge. The conference management system is arranged such that connection to a specific conference residing on a bridge can be made in response to recognition of the network identifier.

This facilitates access to the conference facilities.

## Description

This invention relates to audio conferencing facilities. Such facilities provide the capability for a number of users to participate in a telecommunications session by connecting through a single point of contact. Typically this is achieved by arranging for each user to establish connection to a conference call platform. The platform provides a bridge through which all the participants can be connected so that each one can hear everything said by the others. The platform may provide facilities to prevent cross talk, feedback, etc, and may provide a spatialisation capability to allow different participants' voices to seem to emanate from different loudspeakers.

Simple three-way calling can be achieved in many networks by one of the parties to an existing two-way call establishing a second call, to a third party, and then setting up a "bridge" between the calls. The addition of a fourth or subsequent party, if possible at all, requires the initiating party to set up individual calls to each one, which is cumbersome. Moreover, this facility is of limited application as the initiating party must remain on the call even if the other two parties want to continue without him. The third and subsequent parties do not initiate their own participation but have to be called in. In contrast, dedicated conferencing facilities provide a bridge into which each intending user may connect, making it possible for each user who intends to participate to dial in to a previously-advised number when he is ready. The burden of setting up and controlling the conference is largely passed to the network-based conferencing facility, rather than being the responsibility of one of the participants.

Two classes of conferencing facility are typically available, known as booked and reservationless types. In a booked system, the organiser sets up the conference in advance and advises invitees of the access details (the number to dial and any passcode). The call may be limited to nominated participants. This arrangement is secure, but requires advance notification to all proposed participants. It also ensures that capacity is available at the time agreed for the conference - if capacity is not available at the desired time, a user's attempt to make a reservation will fail. He can of course attempt to reserve at some other time, and whatever time he is eventually able to reserve is guaranteed. The use of access control requires the participants to remember, or record, the access details, and to enter them when the conference is to be joined. This can be inconvenient, for example if the user is in a situation where the user is mobile and does not have passcode information readily available to them.

The reservationless type requires a user simply to dial in to a reservationless conference using a static and predetermined passcode. This number may of course be stored on a "soft key" on the handset if used regularly, to avoid the need to dial a large number of digits. Such a system is suitable for less structured situations, where users do not wish to pre-book the facility but can use it whenever they need it. However, capacity constraints mean that the system is only available on a "first come first served" basis. There are security risks with such a system, as the passcode is accessible to anyone at all, and of course there can be no guarantee that there will be adequate capacity at the required time.

Furthermore, the call flow in existing reservationless systems is very cumbersome to conference hosts. The standard CISCO MeetingPlace system requires the conference host to enter two pieces of information - Profile Number and Profile Password - as well as intermediate DTMF entries to confirm what was entered. This lengthy entry process for hosts often leads to increased amount of helpdesk assistance to start meetings and also leads to customer dissatisfaction. For mobile users, the complexity of access makes it difficult to perform this call flow on a small mobile phone where key strokes are not always ergonomically easy.

The present invention is intended to make calling into a conference simpler, especially for users who are not on the same network as the conference bridge. It is particularly advantageous for mobile phone users.

According to the invention, there is provided a method of preparing a communications conference management system for the establishment of conference calls, comprising the step of pre-programming the management system with identification data for participants authorised to be connected to a specific conference residing on a conference bridge, the identification data including a network identifier (ANI) for each terminal to be authorised for connection, the conference management system being arranged such that connection to a specific conference residing on a bridge can be made in response to recognition of the network identifier.

In another aspect, the invention provides a communications conference management system for the management of conference calls, comprising switching means for controlling connection of user terminals to a specific residing on a conference residing on a bridge, communication means for exchanging data with user terminals, and data storage means for storing network identification data (ANI) for terminals authorised for connection to a conference, and validation means for comparing network identification data relating to terminals making a connection request with the stored identification data, the validation means controlling the switching means such that on receipt of a connection request from an authorised terminal, connection is made to the required conference.

In a preferred arrangement, if such a network identifier is not recognised during an accession attempt the invention provides for intending participants to authenticate themselves via an authentication process, for example using DTMF signals generated by dialled digits from the handset. This process may be used, in particular, to allow new participants whose details have not previously been notified to the management system to be invited to an existing conference group. Such authentication may be arranged to be for a limited duration or number of access attempts.

The process preferably includes validation of the terminals' identities during the process of pre-programming the management system with the identification data for the terminal.

The terminal may have access to a plurality of conferences, which may be maintained on separate bridges, in which case the conference management system is responsive to an additional input made at the time of connection, such as a single keystroke, to identify to which of several conferences for which the network identifier associated with the user terminal is to be connected to the user terminal.

An embodiment of the invention will be described by way of example, with reference to the drawings, in which:
Figure 1 is a schematic diagram of the interactions which take place to establish a conferencing facility for a user
Figure 2 is a schematic diagram of the interactions which take place when a user connects to a conference using a previously-established facility.

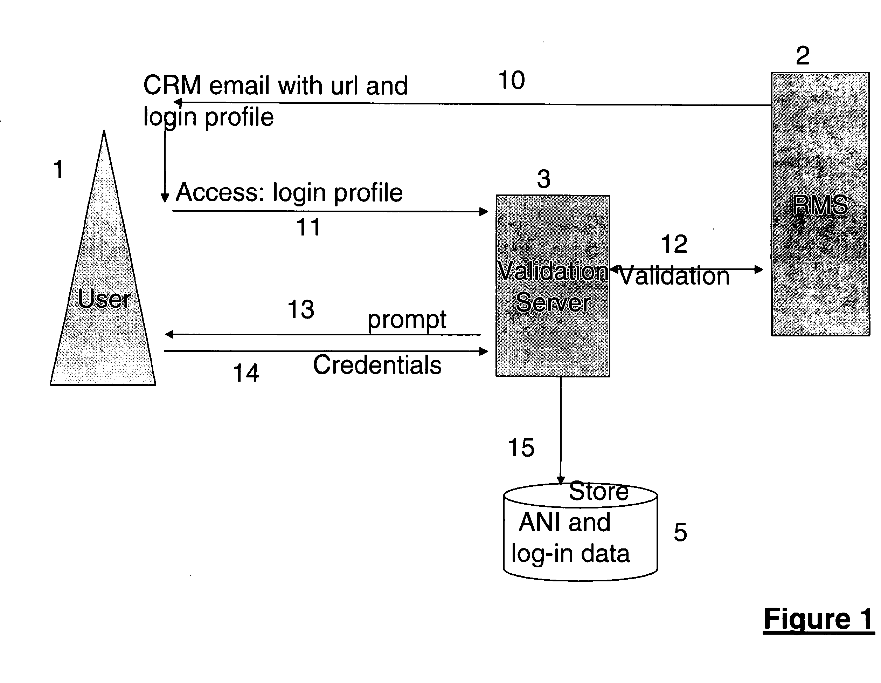

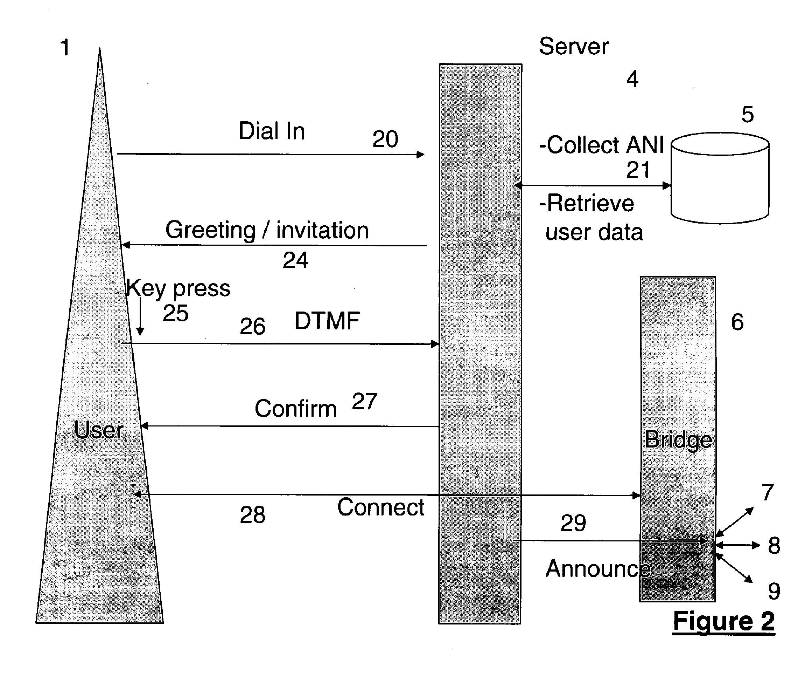

Figure 1 shows the interactions between a user terminal 1 and the various network-based elements which co-operate to establish the facility. These are a reservations management system (RMS) 2, a validation server 3 and a database 5 associated with the conference service platform 4 itself (see Figure 2).

The process requires a user to first register his terminal 1 with the conferencing service database 5. This registration process only needs to be done once, and thereafter the user can access the service as often as he requires, without repeating this registration step. The registration process records the user's ANI (automatic number identification - also known as CLI - calling line identity). Once the user has registered his phone with the platform, he should be able to dial into a defined phone number, and be recognized, from the phone ANI, as authorised to use the service. Access to the user's reservationless account can thus be achieved with minimal key strokes.

The registration process also allows a user to create unique credentials for authentication when using the service via a phone other than one that has already been registered, providing flexibility to users and enhancing the usability of the service. During the registration process the user is permitted to create a security code which, coupled with the Profile Number would authenticate the user. These credentials allow users to come back to a designated web site to update their various configurations. For instance, if a user changes jobs, he may want to configure passcodes for other colleagues so that they can join conferences he is hosting.

The registration process, by which the data is pre-programmed to the reservations management system, has two variants, depending on whether any of the user data can be made available to the reservations management system 2 from a central source or whether the users have to provide all the data. Central provision may be done, for example, by loading the details of authorised users into the database of the reservations management system from some other source, such as a company's internal telephone directory or other Human Resource database. If the data is already available to the reservation management system 2, the user can be sent a customer relationship management (CRM) message 10, by email or some other medium, informing him of the service and providing a registration url or other access means to use when registering. If the user of the terminal 1 chooses to make use of the facility, he accesses the validation server 3 using the registration url provided. In practice, this can be facilitated by providing the url in the original message 10 as a hyperlink. Upon accessing the server (step 11) the user is prompted to provide the following information:
- Email address
- Profile Number (this also acts as the user ID in conferences)
- Security PIN (a unique identifier assigned to a company account set up in the reservations management system that can be used for online portals to confirm that a visitor to the website belongs to the company they say they do).

Both these last items of data may be contained in the CRM email 10 or, for security, in separate emails or other communication methods. The Security PIN may have a limited duration of validity, or have other means to prevent unauthorised access.

The login profile may include the user's ANI, either input by the user or generated automatically.

The user transmits this data 11 to the validation server 3, which validates the information against what is held in the reservations system 2 (step 12). Validated data is then stored in the conferencing service database 5 (step 15)

In the alternative scenario in which user data is not already available in the reservations management system 2, the initial CRM email 10 informing the user of the service provides a prompt for the user to provide additional information beyond that specified above at step 11. In particular, the user's billing account number, and the phone number of the bridge to which the reservationless account is connected (preferably a toll free number). The validation server 3 uses the billing Number and Company Security PIN to check at the validation stage 12 that the user is authorized to register. The user will also be prompted for personal profile information such as name, address, and email address.

In either case, if the validation step 12 fails, the server 3 returns a validation message to the user and provides instructions to help him enter the data properly.

When validation succeeds, the validation server 3 allows the user to complete the registration process, which includes registering his phone's ANI with the service. A prompt 13 may be generated for the user to create unique credentials 14 for use in authentication of any access attempts in which, for some reason, the ANI recognition process fails. These credentials 14 are also stored in the database 5.

This process allows a user access to a conference facility, and specifically allows to a group of users the ability to participate in conferences whenever any two or more members of the group wish to hold one. Authentication may take place whilst a conference is in progress, thereby allowing a new party to join the conference.

Once a user is authorised to use the conference facility, he may now use it to connect to a conference on the bridge 6, as will now be described with reference to Figure 2.

The user first uses the previously-registered terminal 1 to dial into a dedicated conference phone number (step 20). This number is advised to the user as part of the registration process. The number may be stored in the terminal 1 using short-code or voice-activated dialling to simplify connection.

An Interactive Voice Response system forming part of the server 4 collects the user's ANI, collects user information from the database 5 (step 21), and then transmits a message 22 greeting the user, and instructing the user to press a key on his telephone's keypad to open his account. In response to the key being pressed (26), the server requests the user to wait to be joined into his conference, and initiates a dial-out to the user's bridge 6, (step 28). It may also play a name file 29 into the bridge to identify the user. During this process, some comfort noise or holding message 27 may be played into the user's line to confirm that he has not been disconnected. This may, once the user has been authenticated, be supplemented by identification of any users 7, 8, 9 already participating in the conference.

A user 1 may register to access more than one conference,, in which case, as part of the welcome message 24, the user 1 is invited to identify the conference to which he wishes to be connected: for example different keystrokes 26 on the user terminal 1 may be used to initiate connection to a different conference on the bridges 6.

## Claims

1. A method of preparing a communications conference management system for the establishment of conference calls, comprising the step of pre-programming the management system with identification data for participants authorised to be connected to a specific conference residing on a conference bridge, the identification data including a network identifier (ANI) for each terminal to be authorised for connection, the conference management system being arranged such that connection to a specific conference residing on a bridge can be made in response to recognition of the network identifier.

2. The method of claim 1, wherein the method includes validation of the terminals' identities during the process of pre-programming the management system with the identification data for the terminals.

3. The process of claim 1 or claim 2, wherein the conference management system allows for the authentication of at least some of the participants to be valid for a limited period or number of access attempts.

4. A method of establishing conference calls using a system pre-programmed according to any preceding claim, wherein if such a network identifier is not recognised during an accession attempt, the method provides for an authentication process to be operated for the intending participant at the time of connection.

5. A method of establishing conference calls using a system pre-programmed according to the method of claim 1, claim 2 or claim 3, wherein the conference management system is responsive to an additional input from the user terminal, made at the time of connection, to identify to which of several conferences for which the network identifier associated with the user terminal is to be connected to the user terminal.

6. A communications conference management system for the management of conference calls, comprising switching means for controlling connection of user terminals to a conference bridge, communication means for exchanging data with user terminals, and data storage means for storing network identification data (ANI) for terminals authorised for connection to a specific conference residing on a bridge, and validation means for comparing network identification data relating to terminals making a connection request with the stored identification data, the validation means controlling the switching means such that on receipt of a connection request from an authorised terminal, connection is made to the required conference.

7. A communications conference management system according to claim 6, provided with means for pre-loading valid terminal identities to the system in advance of the establishment of a conferencing group.

8. A communications conference management system according to claim 6 or claim 7, wherein the validation means comprises authentication means responsive to a request received from a terminal for access to a conference and not currently associated with a network identifier authorised for connection to the requested conference, the authentication means being arranged to exchange data with the terminal to allow the validation means to control the switching means to permit connection to the requested conference.

9. A communications conference management system according to claim 6, claim 7 or claim 8, wherein the validation means has input means, responsive to an additional input from a user terminal as part of a connection request, to control which of several conferences available to the user terminal is to be connected to the user terminal.
